# EUROPEAN PATENT SPECIFICATION

(11) **EP 3 224 991 B1**
(45) Date of publication and mention of the grant of the patent: **06.01.2021**
(21) Application number: 15805022.9
(22) Date of filing: 18.11.2015
(51) Int. Cl.: H04L 29/06, H04L 12/24, H04L 12/26

(54) **ANOMALY DETECTION IN PROTOCOL PROCESSES**
ANOMALIEDETEKTION IN PROTOKOLLPROZESSEN
DÉTECTION D'ANOMALIE DANS DES PROCESSUS DE PROTOCOLE

(30) Priority: 24.11.2014 US 201414551992
(43) Date of publication of application: 04.10.2017
(73) Proprietor: Cisco Technology, Inc., San Jose, CA 95134 (US)
(72) Inventor: PANI, Ayaskant, San Jose, California 95134 (US); KULKARNI, Gautam Sanjiv, San Jose, California 95134 (US)
(74) Representative: Mathys & Squire
(86) International application number: PCT/US2015/061428
(87) International publication number: WO 2016/085732

(56) References cited:
- US-A1- 2006 020 866
- US-A1- 2014 006 330

## Description

### TECHNICAL FIELD

The present disclosure pertains to anomaly detection methods in a network and more specifically to a method of detecting anomalies in network protocol processes utilizing probabilistic statistical models.

### BACKGROUND

In a data-center or large-scale network running a large number of switches, it is often difficult to detect if a particular switch is performing erratically. For example, it may be difficult to detect if the switch is having an issue with the implementation of protocols or if the switch is showing signs of malfunction due to an attack on the system. Often times, detection of these kinds of issues are not performed properly and, in due course, if the issue is not addressed, the switch can shut down or cause further disruption to the rest of the network, eventually resulting in a major network disruption.
US 2006/020866 discloses systems for monitoring performance of network infrastructure in which data is acquired from executing software applications and execution infrastructure and statistically analysed to identify instances where the statistical description of operating behaviour deviates from expected operating behaviour. US 2014/006330 discloses an anomaly detection approach using a predictive filter module which takes a key performance indicator (KPI) at a first time, predicts the next KPI at a second time and compares this to the actual KPI at that second time.
Aspects of the invention are set out in the independent claims. Certain preferred features are set out in the dependent claims.

### BRIEF DESCRIPTION OF THE DRAWINGS

There are shown in the drawings embodiments that are presently preferred it being understood that the disclosure is not limited to the arrangements and instrumentalities shown, wherein:
FIG. 1 illustrates an example network device according to some aspects of the present disclosure;
FIG. 2 illustrates a schematic block diagram of an example architecture of a network fabric utilizing the principles of present disclosure;
FIG. 3 illustrates an exemplary method embodiment of the present disclosure;
FIG. 4a illustrates a two-dimensional graphical representation of correlated variables;
FIG. 4b illustrates a one-dimensional graphical representation of the representation of FIG. 4a after utilizing PCA; and
FIG. 5 illustrates an alternate method embodiment of the present disclosure.

### Overview

The invention is defined by a method according to claim 1, a system according to claim 8 and a computer-readable storage medium according to claim 9. Further embodiments are defined by the dependent claims.

### Detailed Description:

A computer network is a geographically distributed collection of nodes, or switches, interconnected by communication links and segments for transporting data between endpoints, such as personal computers and workstations. Many types of networks are available, with the types ranging from local area networks (LANs) and wide area networks (WANs) to overlay and software-defined networks, such as virtual extensible local area networks (VXLANs).

LANs typically connect nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), or synchronous digital hierarchy (SDH) links. LANs and WANs can include layer 2 (L2) and/or layer 3 (L3) networks and devices.

The Internet is an example of a WAN that connects disparate networks throughout the world, providing global communication between nodes on various networks. The nodes typically communicate over the network by exchanging discrete frames or packets of data according to predefined protocols, such as the Transmission Control Protocol/Internet Protocol (TCP/IP). In this context, a protocol can refer to a set of rules defining how the nodes or switches interact with each other. Computer networks may be further interconnected by an intermediate network node, such as a router, to extend the effective "size" of each network. Further, a controller, such as a Fabric Controller ("FC") can be configured to control the interaction between nodes/switches.

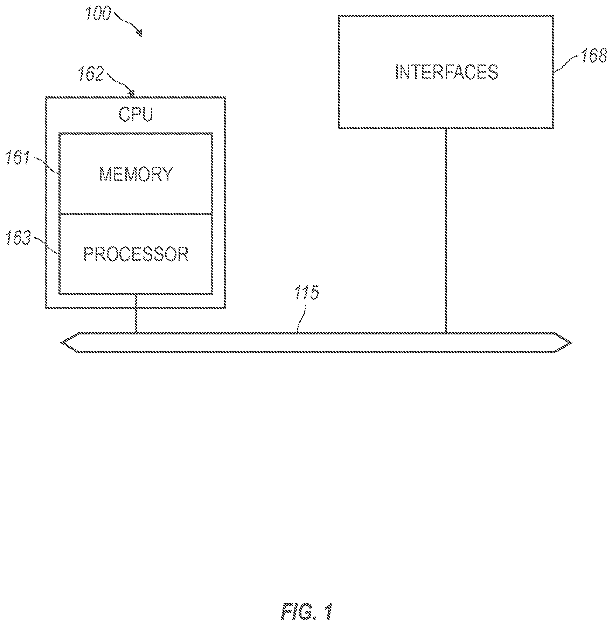

FIG. 1 illustrates an exemplary network device 110 suitable for implementing the present disclosure. Network device 110 can be, for example, a Fabric Controller that is configured to perform anomaly detection of various network features in a fabric using the principles disclosed herein. Thus, the terms "Fabric Controller", "FC", and "network device", shall be used interchangeably throughout this disclosure, and identified by the identifier "110". Network device 110 includes a master central processing unit (CPU) 162, interfaces 168, and a bus 115 (*e.g.,* a PCI bus). When acting under the control of appropriate software or firmware, the CPU 162 is responsible for executing packet management, error detection, and/or routing functions, such as miscabling detection functions, for example. The CPU 162 preferably accomplishes all these functions under the control of software including an operating system and any appropriate applications software. CPU 162 may include one or more processors 163 such as a processor from the Motorola family of microprocessors or the MIPS family of microprocessors. In an alternative embodiment, processor 163 is specially designed hardware for controlling the operations of router 110. In a specific embodiment, a memory 161 (such as non-volatile RAM and/or ROM) also forms part of CPU 162. However, there are many different ways in which memory could be coupled to the system.

The interfaces 168 are typically provided as interface cards (sometimes referred to as "line cards"). Generally, they control the sending and receiving of data packets over the network and sometimes support other peripherals used with the router 110. Among the interfaces that may be provided are Ethernet interfaces, frame relay interfaces, cable interfaces, DSL interfaces, token ring interfaces, and the like. In addition, various very highspeed interfaces may be provided such as fast token ring interfaces, wireless interfaces, Ethernet interfaces, Gigabit Ethernet interfaces, ATM interfaces, HSSI interfaces, POS interfaces, FDDI interfaces and the like. Generally, these interfaces may include ports appropriate for communication with the appropriate media. In some cases, they may also include an independent processor and, in some instances, volatile RAM. The independent processors may control such communications intensive tasks as packet switching, media control and management. By providing separate processors for the communications intensive tasks, these interfaces allow the master microprocessor 162 to efficiently perform routing computations, network diagnostics, security functions, etc.

Although the system shown in FIG. 1 is one specific network device of the present disclosure, it is by no means the only network device architecture on which the present disclosure can be implemented. For example, an architecture having a single processor that handles communications as well as routing computations, etc. is often used. Further, other types of interfaces and media could also be used with the router.

Regardless of the network device's configuration, it may employ one or more memories or memory modules (including memory 161) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc.

In a data center switch or any network switch running network protocols, there is often a level of correlation in the activity level of the switches deployed in the same cluster. Further, each protocol's instance's processing correlates with how many protocol data units it is processing or generating. Collecting samples statistics periodically using distributed mechanisms can be initiated from a central Fabric Controller (FC) 110. While the present disclosure focuses on analyzing statistics gathered from routing protocols, the concepts disclosed herein may be applied to any other protocol processes.

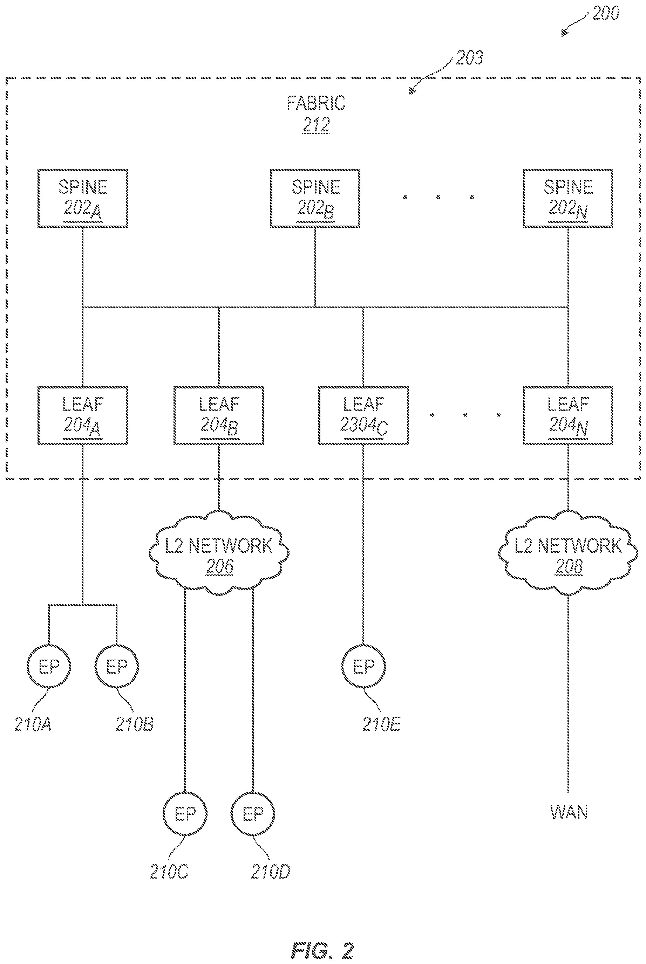

The present disclosure detects anomalies in protocol processes which may occur at a switch or between switches in a network fabric. FIG. 2 illustrates a schematic block diagram of an example architecture 200 for a network fabric 212. The network fabric 212 can include spine switches 202A, 202B,..., 202N (collectively "202") connected to leaf switches (also referred to as "ToRs") 204A, 204B, 204C,..., 204N (collectively "204") in network fabric 212. In the present disclosure, when discussing switches, collectively, (regardless whether they are spine or leaf switches), the reference designator "203" shall be used. Spine switches 202 can be L3 switches in fabric 212. However, in some cases, spine switches 202 can also, or otherwise, perform L2 functionalities. Each leaf node 204 is connected via a link to each spine node 202 connect in fabric 212. Leaf nodes 204 can include access ports (or non-fabric ports) and fabric ports. Fabric ports can provide uplinks to spine switches 202, while access ports can provide connectivity for devices, hosts, endpoints, virtual machines ("VMs"), or external networks to fabric 212.

Leaf nodes 204 can reside at the edge of fabric 212, and can thus represent the physical network edge. In some cases, leaf nodes 204 can be top-of-rack ("ToR") switches configured according to a ToR architecture. In other cases, leaf nodes 204 can be aggregation switches in any particular topology, such as end-of-row (EoR) or middle-of-row (MoR) topologies. Leaf nodes 204 can also represent aggregation switches, for example.

Network connectivity in fabric 212 can flow through leaf nodes 204. Here, leaf nodes 204 can provide servers, resources, endpoints, external networks, or VMs access to fabric 212, and can connect leaf nodes 104 to each other. In some cases, leaf nodes 204 can connect EPGs to fabric 212 and/or any external networks. Each EPG can connect to fabric 212 via one of the leaf nodes 204, for example.

Endpoints 210A-E (collectively "210") can connect to fabric 212 via leaf nodes 204. For example, endpoints 210A and 210B can connect directly to leaf node 204A, which can connect endpoints 210A and 210B to fabric 212 and/or any other one of leaf nodes 204. Similarly, endpoint 210E can connect directly to leaf node 204C, which can connect endpoint 210E to fabric 212 and/or any other of the leaf nodes 204. On the other hand, endpoints 210C and 210D can connect to leaf node 204B via L2 network 206. Similarly, the wide area network (WAN) can connect to leaf nodes 204C or any other leaf node 204 via L3 network 208.

Endpoints 210 can include any communication device, such as a computer, a server, a switch, a router, etc. Although fabric 212 is illustrated and described herein as an example leaf-spine architecture, one of ordinary skill in the art will readily recognize that the subject technology can be implemented based on any network fabric, including any data center or cloud network fabric. Indeed, other architectures, designs, infrastructures, and variations are contemplated herein.

Each leaf node 204 is connected to each spine node 202 in fabric 212. During instances of link-state routing protocol updates, one or more leaf nodes 204 can detect the occurrence of network transitions, such as, for example, failure of one or more spine nodes 202. Examples of link-state routing protocol updates can be for example, intermediate system-to-intermediate system ("IS-IS") or other intra-domain link state routing protocol updates such as Open Shortest Path First ("OSPF") updates. The present disclosure is not limited to any particular type of routing update protocols.

A controller in network fabric 212, i.e., Fabric Controller 110, can be configured to detect anomalies in various network features occurring at a switch or between switches in fabric 212 using the methods described herein. The network features can include any network processes, including routing processes, the following of which are exemplary: (1) CPU percentage of a protocol in a last sampled window; (ii) the number of bytes of new protocol data units produced; (iii) the number of new Shortest Path First (SPF) computations; (iv) the number of link state packets (LSPs) generated; (v) the number of LSPs flooded; (vi) the number of link state transitions; (ii) the amount of memory used by the process; (viii) the role of a switch (i.e. leaf switch or spine switch); (ix) the historic mean CPU usage during the last sampled window; and (x) the historic mean memory usage during the last sampled window. As mentioned above, these processes are merely exemplary and the methods disclosed herein may be used to determine anomalies occurring for any other network processes. Further, although this disclosure focuses on determining if an anomaly exists at a switch during routing processes, the methods disclosed herein can also be applied to other non-routing processes.

FC 110 can periodically receive and store data representing these various protocol variables and analyze the data to determine if any anomalies exist at a particular switch 203, using the methods disclosed herein. Typically, a spike or abnormality in any of these variables indicates an anomaly of some kind. For example, if there is any problem with LSP flooding, a routing protocol will usually resort to re-transmitting at an aggressive rate resulting in excessive amounts of traffic generation. In one embodiment of the methods disclosed herein, statistics regarding network feature variables are collected at each switch 203 in fabric 212, where the role of the switch 203 is considered. The reason for doing so is that feature variable behavior at a spine switch 202 is different from feature variable behavior at a leaf switch 204.

In one embodiment, FC 110 collects, at periodic intervals, data representing various network feature variables from some or all of switches 203 in network fabric 212. The period of data collection can be any period of time. For example, data from each switch 203 can be collected every 60 seconds. Or, data from spine switches 202 can be collected every 30 seconds and data from leaf switches 204 can be collected every 60 seconds. In one embodiment, FC 110 can be configured to run two types of anomaly detection processes. A first anomaly detection process is to determine anomalies between switches 203 having the same or similar roles on an instance of data in order to find out if any one switch 203 is behaving anomalously when compared to other switches 203 having the same or similar role (i.e., one or more of spine switches 202, or one or more of leaf switches 204). Another anomaly detection process is to determine if any anomalies exist between historic patterns of a given switch 203. Over a period of data collection, FC 110 can calculate a normalized parameter vector and collect all non-anomalous instances as a training set to learn the probabilistic model. Based on the fact that the distributions of these variables are normal, a high deviation from the mean will indicate the existence of an anomaly.

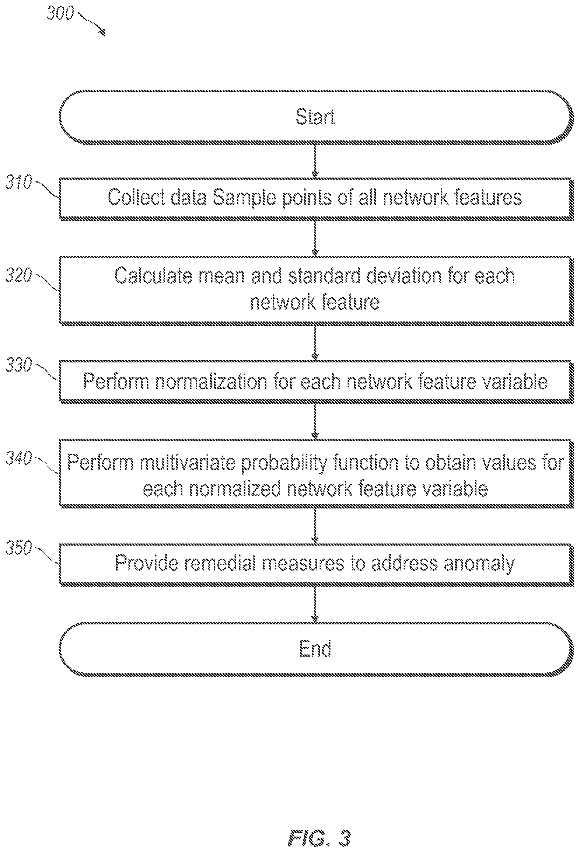

FIG. 3 is a flowchart illustrating steps taken by an embodiment of the anomaly detection method 300 of the present disclosure. FC 110 periodically collects data sample points from switches 203 in a network fabric, at step 310. For example, FC 110 can collect and store a series of network feature values during a predetermined period of time, i.e., 60 seconds, and store the collected values as data sample points forming a first data pattern. These data sample points represent variables of network features at a particular instance such as, for example, memory utilization, CPU utilization, or the number of LSPs generated at a switch 203. The present disclosure is not limited to any specific network features, and thus FC 110 can collect data for any network feature being performed at a given switch 203 in fabric 212. The mean value and standard deviation of each network feature is then determined, at step 320. For example, for the CPU percentage network feature, a plurality of data points, collected at various time intervals, each representing the CPU percentage of a network protocol at a particular switch 203, is received and stored. From these data points, a mean value and a standard deviation value are calculated. The mean and standard deviation values are then calculated for the other network features being analyzed at that switch 203, e.g., the number of LSPs generated at the switch 203, or the number of LSPs flooded by the switch 203. In one embodiment, detected values which are considered "outliers" can be discarded based upon whether they fall outside of a certain range. For example, in one embodiment, only data points between 5% and 95% of the mean value for that particular network feature are utilized, and the rest discarded.

FC 110 then performs a normalization procedure for each network feature variable, at step 330. Normalization is performed on each variable for each network feature because the rate of certain variables is different. For example, the LSP rate is different than the "hello packet" rate. Normalizing these variables will provide a more accurate determination as to whether any of the network feature values represent an anomaly, i.e., if they fall outside of an expected range or threshold. In one embodiment, normalization of each network feature variable is accomplished by the formula:
(X(i,j) - Mean(X(j)) / StdDev(X(j)), where X(i,j) is the value of j-th feature's value for the i-th observation (data sample point).

FC 110 then calculates the probability value (p-value) for each network feature, at step 340. The calculation compares each of the normalized variables for each network feature to the calculated mean and standard deviation values for that network feature to determine if any of the normalized variables fall outside of the expected value, which may indicate that an anomaly with regard to that network feature exists. In one embodiment, a multivariate distribution function is used to determine the p-value. The multivariate distribution function assumes that there is some correlation between at least two network protocol variables. For example, in one scenario, CPU utilization at a switch 203 might be correlated to the number of LSPs generated by that switch 203. These variables may also be correlated to the number of LSPs flooded by the switch 203. Because some of the variables of one network feature may have a correlation to variables of another network feature, a multivariate distribution function is used to determine the p-value for each normalized variable.

In one embodiment, the multivariate distribution function used is a Gaussian multiplicative distribution function, where X[i] represents the i-th network feature, Mu[i] represents the mean value of that feature, and StdDev[i] is the standard deviation of the feature. For example, the network feature could be the CPU load at a particular switch 203 relating to a certain protocol during a sampling instance. Then, the probability that the measured (normalized) value of this feature falling within an acceptable range is governed by the following equation:
Probability of X[i] given Mu[i] and StdDev[i] = (1/ (sqrt(2^{∗}pi) ^{∗} StdDev[i])) ^{∗} (e^ - ((X[i] - Mu[i]^2 / 2 (StdDev[i]^2)))

A computer program either internal to or external from FC 110 can be trained to identify an anomaly by checking to see if the normalized sampled instance of the feature (in this case, the CPU load) at a particular switch 203 falls within an acceptance range, or not, based upon the multiplicative probability the feature variable. In this fashion, an anomaly can be identified. The p-value calculation can be performed for all other normalized network feature values. Based upon the above, FC 110 can flag an anomaly by checking if the normalized sampled instance of each feature value falls within the acceptance range or not. As mentioned above, a dual algorithm can be modeled as two independent models for anomaly detection (current behavior of all switches to see if one switch is behaving anomalously and historic behavior of the same switch). In one embodiment, an anomaly detected in both models for a given switch's protocol parameter vector can be used as a more definitive measure of the existence of an anomaly.

Once an anomaly has been detected, remedial steps can be taken to address the anomaly, at step 350. For example, more detailed internal debug logs and/or event history information can be collected so that it can help in analyzing the issues that caused the anomaly. Alerts can be generated and sent to a network operator, or alerts can be generated automatically, such that the switch where the anomaly has occurred can be quarantined by using a draining mechanism where a link's cost is marginally increased to reduce its preference so that traffic is steered away from that link. The present disclosure is not limited to any particular type of remedial procedure.

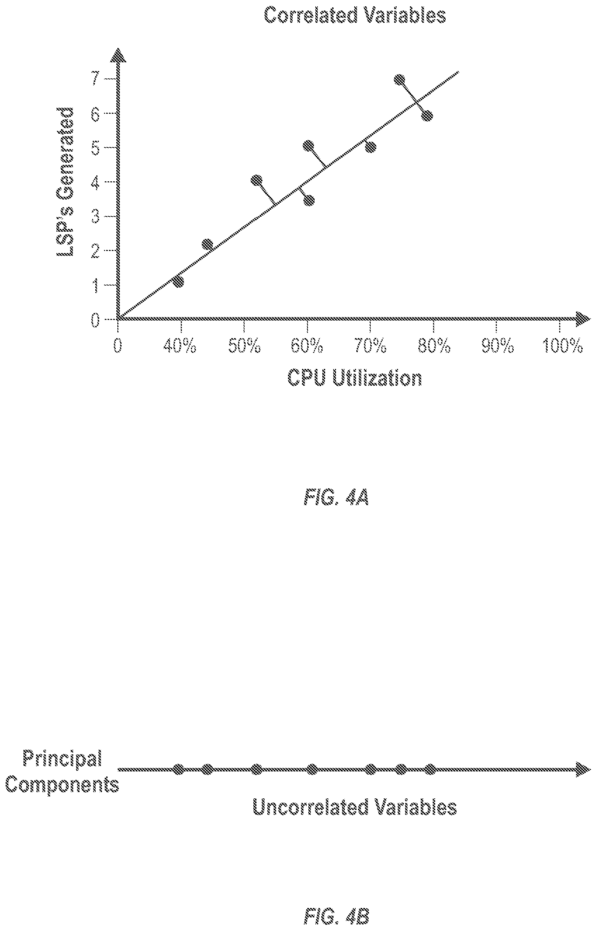

Referring to FIGs. 4a and 4b, an alternate embodiment of the present disclosure will now be discussed. As discussed above, there are circumstances where at least two network feature variables are correlated with each other. In the example given above, CPU utilization at a switch 203 might be correlated to the number of LSPs generated by that switch 203. These variables may also be correlated to the number of LSPs flooded by the switch 203. Thus, for example, if the number of LSPs generated by a switch and flooded by that switch increases, the CPU utilization at that switch 203 might correspondingly increase. In order to determine if an anomaly exists with regard to certain network feature variables, it might be desired to calculate a probability value based on a statistical model that takes into account the correlation between these variables.

As discussed above, a probability value is determined for each network feature value by running a multivariate distribution model for each normalized network feature value to determine if any of these values fall outside the expected range, which may indicate the existence of an anomaly. In instances where it is desirous to analyze many network features (i.e., 20 or 30), it may be desired to reduce the number of computations, since such computations could be taxing on the computer and processing resources involved in the computations. One way to reduce the number of computations is to reduce the redundancy in the collected data by identifying variables that have correlations with each other. FIGs. 4a and 4b illustrate an exemplary technique that reduces the redundancy in the collected data, thus reducing the number of calculations needed to be performed in order to accurately detect anomalies.

FIG. 4a illustrates a two-dimensional representation of various data points collected by FC 110 in the manner described above. In this example, the x-axis represents CPU utilization at a particular switch 203, and the y-axis represents the number of LSPs generated at that switch 203. The graph is referred to as a "two dimensional" representation because two different network features (CPU utilization and LSP generation) are being measured. Various data sample points for each feature are collected at periodic intervals. The result is a first data pattern shown in FIG. 4a. The 2-dimensional representation shows the relationship between LSPs generated at a switch 203 and the CPU utilization at that switch 203. For example, when switch 203 generates an LSP, the CPU utilization at that switch 203 is approximately 40%. When 2 LSPs are generated, the CPU utilization is at 45%. When 3 LSPs are generated, the CPU utilization is approximately 60%, and so on. Thus, the graph of FIG. 4a shows a direct correlation between the two variables, e.g., the number of LSPs generated at switch 203 and the CPU utilization at that switch 203. The scenario depicted in FIG. 4a is simplified, i.e., it shows only two variables and their correlation. However, the anomaly detection methodology disclosed herein may be designed to detect anomalies for 10 or 20 or even 30 different network features, at a particular switch 203. Thus, the two-dimensional representation of FIG. 4a can be extrapolated to a 10-dimension, 20-dimension or even a 30-dimension representation, where some or all of the network feature variables have some correlation with each other.

Referring again to FIG. 4a, it can be seen that there is a direct correlation between the two variables, LSPs generated and CPU utilization; when the number of LSPs generated at a particular switch 203 increases, the CPU utilization at that switch 203 also increases. In order to leverage this relationship and reduce the number of variables that need to be analyzed by the probability model, a dimensionality reduction mechanism may be employed. One such mechanism that can be utilized is Principal Component Analysis ("PCA"). PCA is a statistical methodology that converts a set of data observations that contain possibly correlated variables into a set of uncorrelated variables called principal components. In FIG. 4a, a first data pattern is shown, where the first data pattern represents data sample points for two different variables. Thus, FIG. 4a shows two "dimensions." Because, there is a correlation between these two variables, as shown in the graph, PCA can be employed in order to reduce the dimensionality, resulting in a single dimension representation that captures the correlation of these two variables.

FIG. 4b illustrates a one-dimensional representation of the two-dimensional representation of FIG. 4a, after PCA has been performed on the two variables. Because there exists a correlation between the number of LSPs generated and the CPU utilization, a new representation can be presented capturing this relationship. PCA, as is known in the art, reduces the dimensionality by incorporating the correlation between variables into a new relationship having fewer variables or components than the number of original variables. For example, FIG. 4b shows a one-dimensional representation, having only one principal component. This principal component captures the correlation between the two-dimensions (LSPs generated and CPU usage) shown in FIG. 4a. After PCA is performed, the resulting principal component is then used in a statistical model to determine the probability that this component is outside a particular range, and thus, indicating that an anomaly exists. Advantageously, in this example, by using PCA, it is no longer required to calculate p-values for each normalized CPU utilization variable and each LSP generated variable. Instead, a single variable is used as the input to the statistical model that determines the probability value, where this single variable captures both the CPU utilization and the LSP generation, due to their correlation with each other. Extrapolating this technique, it can be seen that by using PCA, the number of dimensions (i.e., the number of network features) can be reduced drastically, thus reducing the amount of processing needed to perform the probability model in order to determine the existence of an anomaly.

PCA serves not only to reduce the dimensionality but also results in series of principle components that have no correlation with each other. In other words, the components or variables input into the probability model are uncorrelated, since, in essence, PCA has already taken into account the correlation of various variables with each other. Thus, rather than using a multivariate Gaussian distribution function to determine the p-values for each normalized network feature variable, an independent distribution function may be used. An independent Gaussian function is one example that may be used. The independent Gaussian model assumes that the variables input are independent from one another. By multiplying each of the p-values calculated by the independent Gaussian model, an aggregate probability can be obtained. This aggregate probability is compared to a threshold value, and if the aggregate probability falls below the threshold value, an anomaly can be flagged.

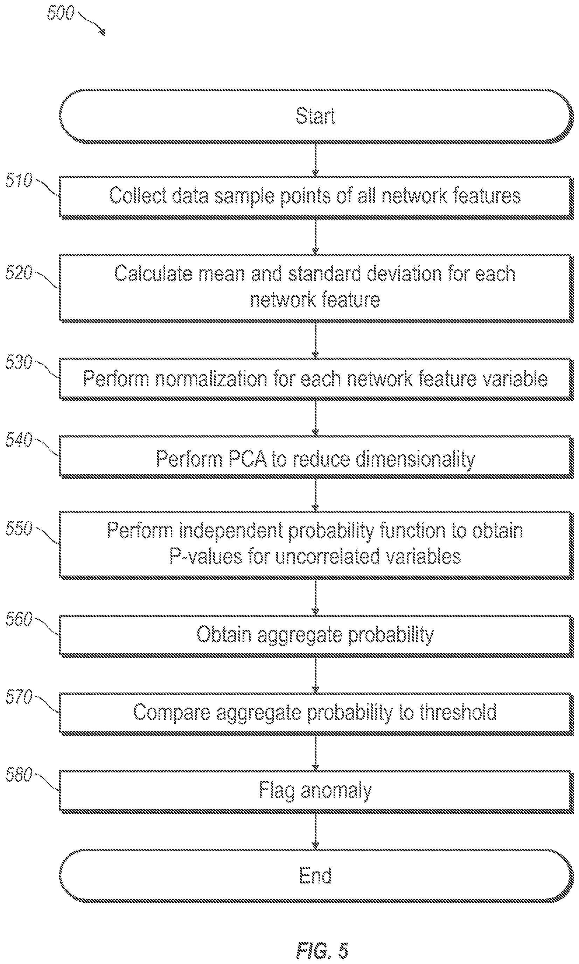

FIG. 5 illustrates an exemplary method 500 performed by an embodiment of the present disclosure, where PCA is utilized. Steps 510, 520 and 530 are similar to steps 310, 320 and 330 of FIG. 3. In these steps, data sample points are collected for various network features, at step 510, the mean and standard deviation are then calculated for each network feature, at step 520, a normalization of each network feature variable is performed, at step 530. If it is determined that at least two of the network features are correlated, then PCA is performed in order to reduce the dimensionality based on the correlation, as step 540. An independent Gaussian probability function is then performed, at step 550. This function, performed with only independent variables, can be performed fewer times than a probability function that uses correlated variables, because PCA reduces the number of original variables into fewer principal components. This results in fewer variables to be analyzed, few computations, and, thus, fewer processing requirements. An aggregate probability value is obtained by multiplying each p-value, at step 560. This aggregate probability value is then compared to a threshold value, at step 570, and if the aggregate probability value is below the threshold value, an anomaly is flagged, at step 580. As described above, remedial measures can be taken to address the anomaly.

In another embodiment, instead of each data sample point representing a discrete measurement of a network variable at an instance of time, each data point can represent a number of network variable measurements over a window of time. This might be desired to detect the occurrence of an anomaly based not just upon a one-time occurrence or "spike" but over a period of time. Thus, for example, 10 measurements can be taken measuring CPU utilization at a given switch 203. These measurements, collectively, can represent the "sample data point" for the CPU utilization variable in the probability computation. This can also be done for some or all of the other network variables. So, for example, if there are 30 network feature variables, and 10 measurements are taken for each network feature variable, a sample size of 300 variables can be used to form a data set. This allows for the determination of the existence of a contextual anomaly for each network feature, i.e., a series of anomalous measurements over a period of time, as opposed to a point anomaly, i.e., the occurrence of a single anomalous measurement, which may in some instances be for reasons other than the existence of an anomaly. The present disclosure is not limited to collecting data for each network feature variable over any specific window of time or for any specific number of measurements.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method performed by a fabric controller (110), said method comprising:
performing a first anomaly detection process to determine anomalies between a plurality of switches (203) having the same roles, in order to find out if any one of the plurality of switches is behaving anomalously when compared to other switches of the plurality of switches (202, 204), wherein the plurality of switches having the same roles comprise either spine switches (202) or leaf switches (204);
performing a second anomaly detection process to determine if any anomalies exist between historic patterns of a given switch of the plurality of switches (203); and
determining the existence of an anomaly at the given switch upon detecting an anomaly for the given switch in both the first and the second anomaly detection processes;
wherein performing any of the first and the second anomaly detection processes comprises:
collecting data sample points to form a first data set, each of the data sample points representing one of a plurality of network feature variables, each of the plurality of network feature variables associated with a corresponding network feature of a plurality of network features, the plurality of network features occurring at the given switch in case of the second anomaly detection process and between the switches having the same roles in case of the first anomaly detection process;
calculating a standard deviation and a mean value of the plurality of network feature variables for each of the plurality of network features (520);
performing normalization of the plurality of network feature variables to obtain normalized network feature variables (530);
calculating, using the standard deviation and the mean value for each network feature, a probability value, p-value, for each of the normalized network feature variables; and
determining if an anomaly exists with respect to each of the plurality of network features based at least upon the p-value for each of the normalized network feature variables (570-580).

2. The method of claim 1, further comprising determining if a correlation exists between at least two network features in the first data set, wherein calculating the p-value for each normalized network feature variable includes performing a multivariate distribution function for each of the normalized network feature variables if the correlation exists between the at least two network features.

3. The method of claim 2, wherein if the correlation exists between at least two network features, further comprising:
reducing a number of network feature variables of the first data set resulting in a second data set having a number of network feature variables that is less than the number of network feature variables of the first data set, the second data set including only uncorrelated network features.

4. The method of claim 3, wherein reducing the number of network feature variables of the first data set resulting in a second data set having a number of network feature variables that is less than the number of network feature variables of the first data set includes performing a principal component analysis, PCA, on the first data set.

5. The method of claim 3, wherein calculating the p-value for each normalized network feature value includes performing an independent Gaussian distribution function for each network feature variable of the second data set.

6. The method of claim 1, further comprising taking remedial action to correct the anomaly when it is determined that an anomaly exists.

7. The method of claim 1, wherein each sample data point represents a plurality of network feature variables collected over a period of time.

8. A system (100) comprising:
a processor (162); and
a computer-readable storage medium having stored therein instructions which, when executed by the processor, cause the processor to perform the method of any of claims 1 to 7.

9. A computer-readable storage medium having stored therein instructions which, when executed by a processor, cause the processor to perform the method recited in any one of claims 1 to 7.

## Patentansprüche

1. Verfahren, das von einem Fabric Controller (110) durchgeführt wird, wobei das genannte Verfahren Folgendes beinhaltet:
Durchführen eines ersten Anomalie-Erkennungsprozesses, um Anomalien zwischen mehreren Switches (203) mit den gleichen Rollen zu bestimmen, um herauszufinden, ob sich einer der mehreren Switches im Vergleich zu anderen Switches der mehreren Switches (202, 204) anomal verhält, wobei die mehreren Switches mit den gleichen Rollen entweder Spine-Switches (202) oder Leaf-Switches (204) umfassen;
Durchführen eines zweiten Anomalie-Erkennungsprozesses, um festzustellen, ob Anomalien zwischen historischen Mustern eines gegebenen Switch der mehreren Switches (203) existieren; und
Bestimmen des Vorhandenseins einer Anomalie an dem gegebenen Switch bei Erkennung einer Anomalie für den gegebenen Switch sowohl im ersten als auch im zweiten Anomalie-Erkennungsprozess;
wobei das Durchführen eines aus erstem und zweitem Anomalie-Erkennungsprozess Folgendes beinhaltet:
Sammeln von Datenabtastpunkten, um einen ersten Datensatz zu bilden, wobei jeder der Datenabtastpunkte eine von mehreren Netzwerkmerkmalsvariablen darstellt, wobei jede der mehreren Netzwerkmerkmalsvariablen mit einem entsprechenden Netzwerkmerkmal von mehreren Netzwerkmerkmalen assoziiert ist, wobei die mehreren Netzwerkmerkmale an dem gegebenen Switch im Falle des zweiten Anomalie-Erkennungsprozesses und zwischen den Switches mit den gleichen Rollen im Falle des ersten Anomalie-Erkennungsprozesses auftreten;
Berechnen einer Standardabweichung und eines Mittelwertes der mehreren Netzwerkmerkmalsvariablen für jedes der mehreren Netzwerkmerkmale (520);
Durchführen einer Normalisierung der mehreren Netzwerkmerkmalsvariablen, um normalisierte Netzwerkmerkmalsvariablen (530) zu erhalten;
Berechnen, anhand der Standardabweichung und des Mittelwertes für jedes Netzwerkmerkmal, eines Wahrscheinlichkeitswertes, p-Wert, für jede der normalisierten Netzwerkmerkmalsvariablen; und
Feststellen, ob eine Anomalie in Bezug auf jedes der mehreren Netzwerkmerkmale besteht, mindestens auf der Basis des p-Wertes für jede der normalisierten Netzwerkmerkmalsvariablen (570-580).

2. Verfahren nach Anspruch 1, das ferner das Feststellen beinhaltet, ob eine Korrelation zwischen mindestens zwei Netzwerkmerkmalen im ersten Datensatz besteht, wobei das Berechnen des p-Wertes für jede normalisierte Netzwerkmerkmalsvariable das Durchführen einer multivariaten Verteilungsfunktion für jede der normalisierten Netzwerkmerkmalsvariablen beinhaltet, wenn die Korrelation zwischen den mindestens zwei Netzwerkmerkmalen besteht.

3. Verfahren nach Anspruch 2, das, wenn die Korrelation zwischen mindestens zwei Netzwerkmerkmalen besteht, ferner Folgendes beinhaltet:
Reduzieren einer Anzahl von Netzwerkmerkmalsvariablen des ersten Datensatzes, was zu einem zweiten Datensatz mit einer Anzahl von Netzwerkmerkmalsvariablen führt, die geringer ist als die Anzahl von Netzwerkmerkmalsvariablen des ersten Datensatzes, wobei der zweite Datensatz nur unkorrelierte Netzwerkmerkmale enthält.

4. Verfahren nach Anspruch 3, wobei das Reduzieren der Anzahl von Netzwerkmerkmalsvariablen des ersten Datensatzes, was zu einem zweiten Datensatz mit einer Anzahl von Netzwerkmerkmalsvariablen führt, die geringer ist als die Anzahl von Netzwerkmerkmalsvariablen des ersten Datensatzes, das Durchführen einer Hauptkomponentenanalyse, PCA, an dem ersten Datensatz beinhaltet.

5. Verfahren nach Anspruch 3, wobei das Berechnen des p-Wertes für jeden normalisierten Netzwerkmerkmalswert das Durchführen einer unabhängigen Gaußschen Verteilungsfunktion für jede Netzwerkmerkmalsvariable des zweiten Datensatzes beinhaltet.

6. Verfahren nach Anspruch 1, das ferner das Ergreifen von Abhilfemaßnahmen beinhaltet, um die Anomalie zu korrigieren, wenn festgestellt wird, dass eine Anomalie vorliegt.

7. Verfahren nach Anspruch 1, wobei jeder Abtastdatenpunkt mehrere Netzwerkmerkmalsvariablen darstellt, die über einen Zeitraum gesammelt wurden.

8. System (100), das Folgendes umfasst:
einen Prozessor (162); und
ein computerlesbares Speichermedium, auf dem Befehle gespeichert sind, die bei Ausführung durch einen Prozessor bewirken, dass der Prozessor das Verfahren nach einem der Ansprüche 1 bis 7 durchführt.

9. Computerlesbares Speichermedium, auf dem Befehle gespeichert sind, die bei Ausführung durch einen Prozessor bewirken, dass der Prozessor das Verfahren nach einem der Ansprüche 1 bis 7 durchführt.

## Revendications

1. Procédé réalisé par un contrôleur de structure de commutation (110), ledit procédé comprenant :
la réalisation d'un premier processus de détection d'anomalies pour déterminer des anomalies entre une pluralité de commutateurs (203) remplissant les mêmes rôles, afin d'établir que l'un quelconque de la pluralité de commutateurs se comporte de manière anormale ou non en comparaison à d'autres commutateurs de la pluralité de commutateurs (202, 204), la pluralité de commutateurs remplissant les mêmes rôles comprenant soit des commutateurs troncs (202), soit des commutateurs feuilles (204) ;
la réalisation d'un second processus de détection d'anomalie pour déterminer que des anomalies existent ou non entre des schémas historiques d'un commutateur donné de la pluralité de commutateurs (203) ; et
la détermination de l'existence d'une anomalie au niveau du commutateur donné à la détection d'une anomalie pour le commutateur donné dans les deux premier et second processus de détection d'anomalies ;
dans lequel la réalisation de l'un quelconque des premier et second processus de détection d'anomalies comprend :
la collecte de points d'échantillons de données pour former un premier ensemble de données, chacun des points d'échantillons de données représentant une variable d'une pluralité de variables de caractéristiques de réseau, chacune de la pluralité de variables de caractéristiques de réseau étant associée à une caractéristique de réseau correspondante d'une pluralité de caractéristiques de réseau, la pluralité de caractéristiques de réseau se produisant au niveau du commutateur donné dans le cas du second processus de détection d'anomalie et entre les commutateurs remplissant les mêmes rôles dans le cas du premier processus de détection d'anomalie ;
le calcul d'un écart-type et d'une valeur moyenne de la pluralité de variables de caractéristiques de réseau pour chacune de la pluralité de caractéristiques de réseau (520) ;
la réalisation de la normalisation de la pluralité de variables de caractéristiques de réseau pour obtenir des variables de caractéristiques de réseau normalisées (530) ;
le calcul, au moyen de l'écart-type et de la valeur moyenne pour chaque caractéristique de réseau, d'une valeur de probabilité, valeur p, pour chacune des variables de caractéristiques de réseau normalisées ; et
la détermination qu'une anomalie existe ou non relativement à chacune de la pluralité de caractéristiques de réseau sur la base au moins de la valeur p pour chacune des variables de caractéristiques de réseau normalisées (570-580).

2. Procédé selon la revendication 1, comprenant en outre la détermination qu'une corrélation existe ou non entre deux caractéristiques de réseau dans le premier ensemble de données, le calcul de la valeur p et pour chaque variable de caractéristique de réseau normalisée comportant la réalisation d'une fonction de distribution multivariée pour chacune des variables de caractéristiques de réseau normalisées si la corrélation existe entre les au moins deux caractéristiques de réseau.

3. Procédé selon la revendication 2, comprenant en outre si la corrélation existe entre au moins deux caractéristiques de réseau :
la réduction d'un nombre de variables de caractéristiques de réseau du premier ensemble de données résultant en un second ensemble de données ayant un nombre de variables de caractéristiques de réseau inférieur au nombre de variables de caractéristiques de réseau du premier ensemble de données, le second ensemble de données comportant uniquement des caractéristiques de réseau non corrélées.

4. Procédé selon la revendication 3, dans lequel la réduction du nombre de variables de caractéristiques de réseau du premier ensemble de données résultant en un second ensemble de données ayant un nombre de variables de caractéristiques de réseau inférieur au nombre de variables de caractéristiques de réseau du premier ensemble de données comporte la réalisation d'une analyse de composants principaux, PCA, sur le premier ensemble de données.

5. Procédé selon la revendication 3, dans lequel le calcul de la valeur p pour chaque valeur de caractéristique de réseau normalisée comporte la réalisation d'une fonction de distribution gaussienne indépendante pour chaque variable de caractéristique de réseau du second ensemble de données.

6. Procédé selon la revendication 1, comprenant en outre l'adoption d'une action réparatrice pour corriger l'anomalie quand il est déterminé qu'une anomalie existe.

7. Procédé selon la revendication 1, dans lequel chaque point de données d'échantillon représente une pluralité de variables de caractéristiques de réseau collectées durant une période de temps.

8. Système (100) comprenant :
un processeur (162) ; et
un support de mémorisation lisible par ordinateur sur lequel sont mémorisées des instructions qui, à leur exécution par le processeur, amènent le processeur à réaliser le procédé selon l'une quelconque des revendications 1 à 7.

9. Support de mémorisation lisible par ordinateur sur lequel sont mémorisées des instructions qui, à leur exécution par un processeur, amènent le processeur à réaliser le procédé selon l'une quelconque des revendications 1 à 7.
